# EUROPEAN PATENT APPLICATION

(11) **EP 0 957 396 A2**
(43) Date of publication of application: **17.11.1999**
(21) Application number: 98117533.4
(22) Date of filing: 16.09.1998
(51) Int. Cl.: G03B 21/60

(54) **Front projection screen**

(30) Priority: 13.05.1998 IT TN980006
(71) Applicant: Gomarasca, Bruno, 38050 Povo (Trento) (IT); Genetti, Armando, 38100 Villazzano (Trento) (IT)
(72) Inventor: Gomarasca, Bruno, 38050 Povo (Trento) (IT); Genetti, Armando, 38100 Villazzano (Trento) (IT)

(57) **Abstract**

This invention allows the construction of rigid, semi-rigid or flexible cinema projection screens with surfaces having particularly high levels of reflective gain and directional control. It comprises a reflective layer (figure B - 3) a transparent layer with surface incisions (figure B - 1) coupled together using a thin transparent adhesive (figure B - 2).

## Description

Projection systems are used in many different situations, some of which require high luminosity values of the screen such as environments with sources of light such as lamps or windows, or open air projections where it is difficult to darken the environment sufficiently. In other cases a well spread out audience requires a screen with a high angular dispersion. The use of CRT video projectors, given the different projection geometry between blue, green and red tubes, tends to give preference to screens of this second type which do not create colour dominant zones. (figure e : 1 area of the diffusion of light from a highly efficient and selectively directional screen, 2 zone where red is prevalent, 3 neutral zone, 4 zone where blue is prevalent).
The screens so far in production, developed with a mixture of particular plastics or with the painting of a flexible support, have luminosity values which reach at the most double that of the classic opaque white screens. On the other hand the useful viewing angle is reduced to 10°-15° form the axis of the system. The principal defect of this surface is the low percentage of light which is reflected towards the audience. In reality, a large part of the luminosity which reaches the screen is lost, in part due to absorption within the screen material, and to a larger extent due to reflection in dead zones such as the ceiling, floor and side walls.
In order to have superior performance screens it is necessary to move towards concave screen panels developed with either metallic sheets or painted prints. These guarantee a high luminosity gain, between 5 to ten times higher than white ones. Also concave screens partly resolve the angular dispersion problem due to the form which avoids light falling on the borders. As opposed to plastic materials, along with a high viewing angle the image is very dark in that the percentage of dispersed light in that area is very low. The form, however, represents its limit due to its being cumbersome and to its aesthetics not pleasing to all.

This invention allows rigid, semi-rigid or flexible projection surfaces to be developed with high gain values and controlled dispersion angles.

An aluminium sheet is used as a reflective base coupled with a thin transparent plastic film with surface incisions (embossing or other production technique) which modifies its optical properties (figure b: 1 transparent layer, 2 adhesive, 3 reflective layer).
The high gain is guaranteed by the aluminium which reflects, in a manner analogous to that of a mirror, about 90% of the incident light. The presence of the front layer transforms the mirror reflection, characterised by a single return direction of the light ray (figure c), into an opaque reflection, where the ray of light is reflected within a sector (figure d), whose range is determined by the type of projector used and the width of the spectator area (figure e, f). It is evident from the diagrams that the angular dispersion required from the screen in the horizontal plane is higher with respect to the vertical one. This behavioural deformation might suggest the use of a embossed lenticular design (figure g) or multi-line (figure h) or other designs extended vertically which restrict the reflection angle in this sense whilst increasing the gain. Once established that the over all efficiency of the screen does not in fact change, it may be observed that the same quantity of light distributed over a smaller solid angle increases the gain and vice versa a larger angle decreases it.

A good result is achieved with symmetric embossing such as micro spheres (figure i) micro prisms (figure l) or other incisions giving a strong opaque effect, as long as the grain is thin enough not to be visible under projection. In this case the horizontal and the vertical dispersion coincide.

Screens of this type may be developed both with a rigid base and with thin flexible sheets, to be used with auto-winding structures (spring-driven, motorised screens) or on portable screens.
The flexible version is obtained by coupling the embossed transparent film with another thin film which undergoes an aluminising treatment, that is a deposition of a thin layer of evaporated aluminium at a high temperature under a high level vacuum environment. The coupling is done by calendering the two sheets with the introduction of a specific adhesive, or using a bio-adhesive film between the two sheets. A sandwich is obtained with the aluminium layer protected in front and behind by the two plastic films, with optical characteristics modifiable according to the type of embossing and the thickness of the front surface as well as the thickness of the metal layer and the degree of roughness (or a particular incision) of the back surface. The transparency of the front material effects just the reflective gain and therefore should as high as possible in so much as that the angular dispersion does not vary accordingly.
The rigid version is achieved by placing a metal sheet of adequate thickness in place of the aluminium film, but the same results can be achieved with particular materials such as alucobond or acrylic sheets, polycarbonate and other similar materials treated with aluminium under high vacuum. Even in this case the metal surface is added to a front sheet with micro incisions. In each of these cases the optical properties of the final product depend on the collective characteristics of the single sheets and cannot be determined precisely by theoretical means.

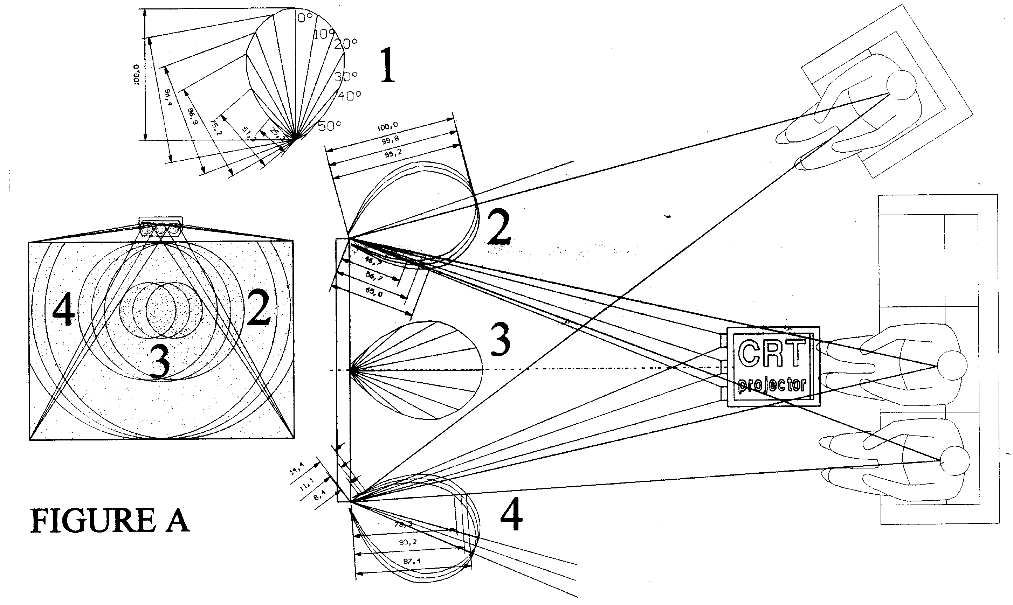

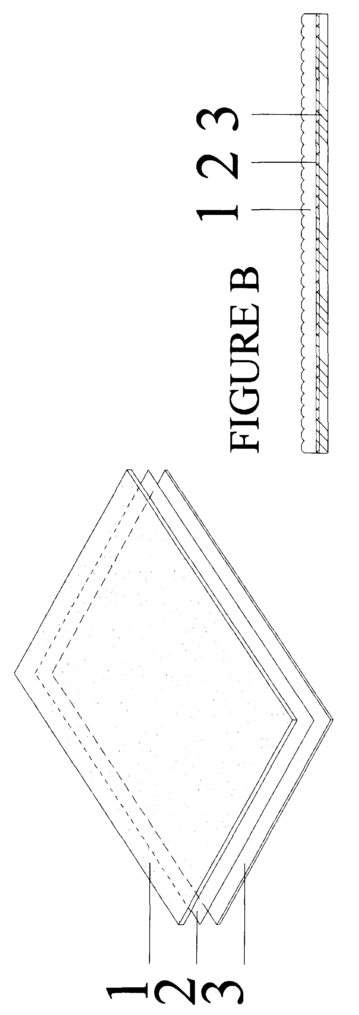

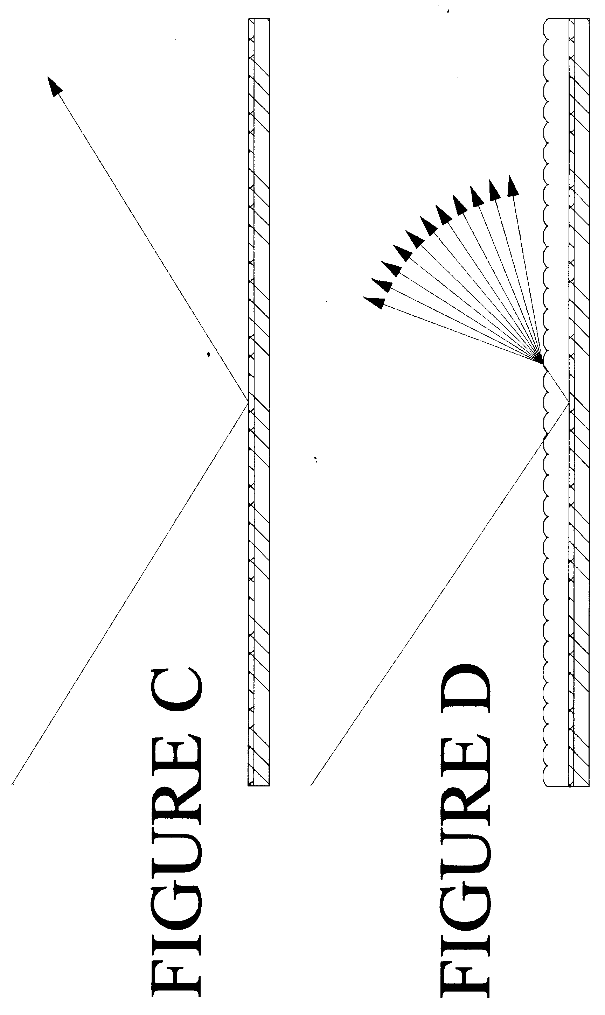

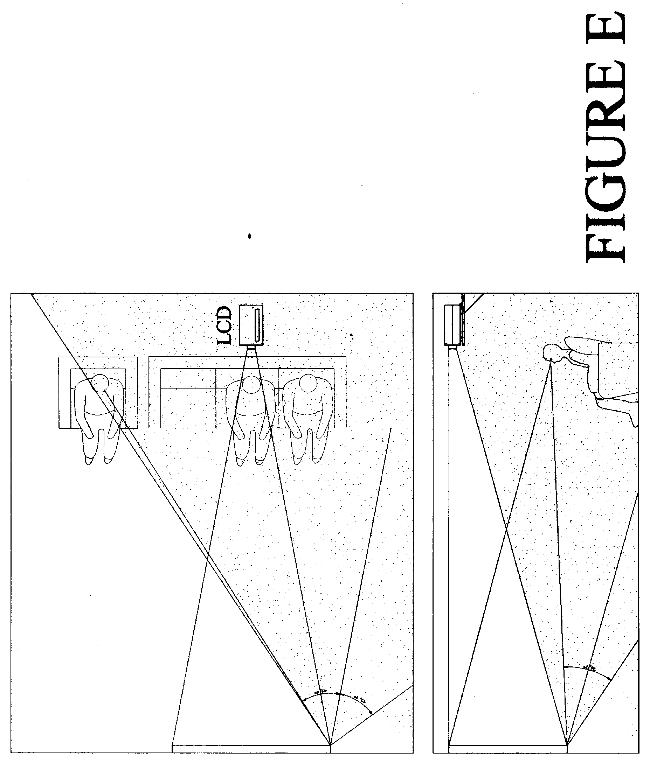

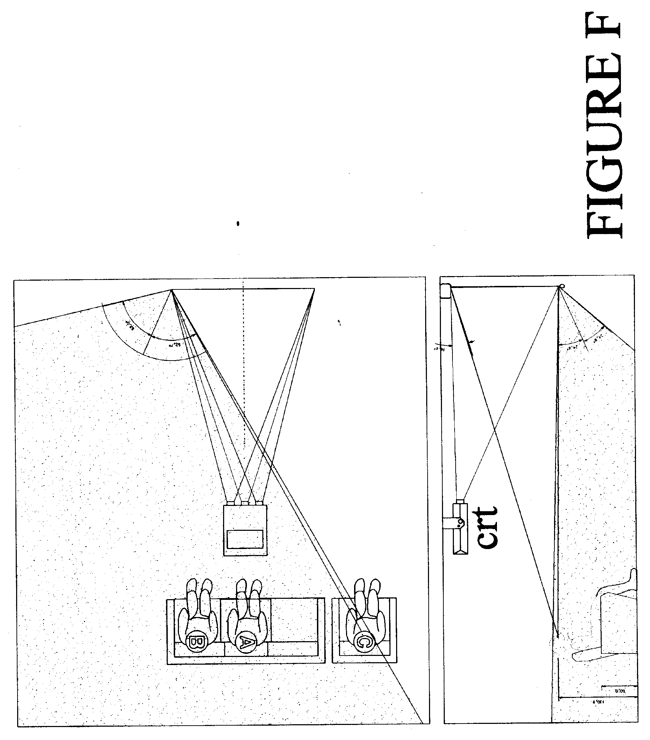

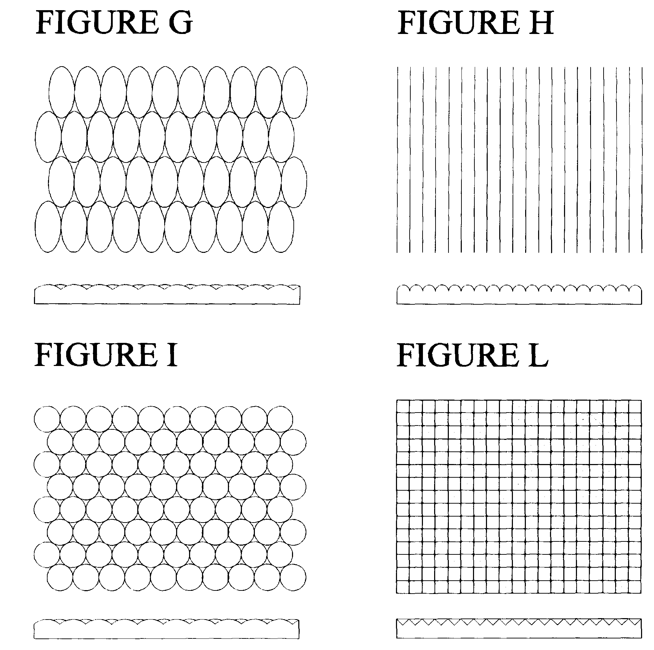

## Claims

1. Opaque aluminium sheet coupled with a film of transparent embossed plastic. The use of opaque aluminium in general represents the best starting point for developing the best trade off between gain and useful viewing angle. In fact the correction of the reflection due to the embossed film is minimal, and therefore the loss in efficiency is also very low.

2. Anodised aluminium sheet coupled with a film of transparent embossed plastic. For the reasons given above, the anodised sheet, which gives a more selectively directional reflection requires a deeper incision in the transparent film which increases the viewing angle thereby reducing however the frontal gain.

3. Rough aluminium sheet coupled with a film of transparent embossed plastic. The rough finishing requires an even deeper incision, but is to be recommended anyway in situations where the width of the audience is very low and the projector is a long way from the screen (LCD or similar).

4. Smooth aluminium sheet coupled with a film of transparent embossed plastic. Similar behaviour to that of the rough aluminium.

5. Opaque aluminium sheet coupled with special transparent varnish with corrugated front surface, The roughness of the front surface is obtained using an adequate dosage of solvents in the varnish which in the evaporation phase give a similar effect to the embossing of the cloth. The layer of varnish is thinner than the plastic film and gives a better transparency. It is more suited to an opaque or anodised base

6. Anodised aluminium sheet coupled with special transparent varnish with corrugated front surface.

7. Rough aluminium sheet coupled with special transparent varnish with corrugated front surface.

8. Smooth aluminium sheet coupled with special transparent varnish with corrugated front surface. The rough and the lucid sheets require a more accentuated frontal roughness in order to achieve a good trade off between gain and selective directionality.

9. Opaque aluminium sheet coupled with a film of transparent embossed plastic on both faces. The double embossing increases the opaque effect and is suited to the mirror or smooth reflection of the sheet.

10. Anodised aluminium sheet coupled with a film of transparent embossed plastic on both faces.

11. Rough aluminium sheet coupled with a film of transparent embossed plastic on both faces.

12. Smooth aluminium sheet coupled with a film of transparent embossed plastic on both faces.

13. Rigid plastic sheet aluminised through a deposition procedure under vacuum coupled with a film of transparent embossed plastic. Analogously to the aluminium sheet, the finishing of the face to be aluminised can be opaque, smooth or even embossed and in each case a coupling with a frontal film with incisions of varying depth is required.

14. Rigid plastic sheet aluminised through a deposition procedure under vacuum coupled with special transparent varnish with a corrugated front surface.

15. Rigid plastic sheet aluminised through a deposition procedure under vacuum coupled with a film of transparent plastic embossed on both sides.

16. Smooth flexible plastic film, aluminised under vacuum, coupled with a film of transparent embossed plastic. The same considerations are valid as for the surface finishing of the rigid aluminised sheets, and therefore the type of frontal embossing should be chosen according to the quality of the reflection of the rear aluminised film. The flexible film is used mostly to construct motorised screens which can occasionally show undulations within the cloth. Such undulations, in the case of a too accentuated directivity, create lighter and darker zones thereby disturbing the viewing. It is therefore preferable to use a cloth with a wider viewing angle which gives a homogenous reflection across the whole screen and is also better suited to CRT projectors.

17. Smooth flexible plastic film, aluminised under vacuum, coupled with special transparent varnish with a corrugated front surface.

18. Smooth flexible plastic film, aluminised under vacuum, coupled with a film of transparent plastic embossed on both sides.

19. Embossed flexible plastic film, aluminised under vacuum, coupled with a film of transparent embossed plastic.

20. Embossed flexible plastic film, aluminised under vacuum, coupled with special transparent varnish with a corrugated front surface.

21. Embossed flexible plastic film, aluminised under vacuum, coupled with a film of transparent plastic embossed on both sides.

22. Flexible glass-fibre cloth film, aluminised under vacuum, coupled with a film of transparent embossed plastic.

23. Flexible glass-fibre cloth film, aluminised under vacuum, coupled with special transparent varnish with a corrugated front surface.

24. Flexible glass-fibre cloth film, aluminised under vacuum, coupled with a film of transparent plastic embossed on both sides

25. Flexible cotton cloth film, aluminised under vacuum, coupled with a film of transparent embossed plastic.

26. Flexible cotton cloth film, aluminised under vacuum, coupled with special transparent varnish with a corrugated front surface.

27. Flexible cotton cloth film, aluminised under vacuum, coupled with a film of transparent plastic embossed on both sides.

28. Flexible carbon-fibre cloth film, aluminised under vacuum, coupled with a film of transparent embossed plastic.

29. Flexible carbon-fibre cloth film, aluminised under vacuum, coupled with special transparent varnish with a corrugated front surface.

30. Flexible carbon-fibre cloth film, aluminised under vacuum, coupled with a film of transparent plastic embossed on both sides.
